# EUROPEAN PATENT APPLICATION

(11) **EP 4 734 240 A1**
(43) Date of publication of application: **29.04.2026**
(21) Application number: 25208676.4
(22) Date of filing: 14.10.2025
(51) Int. Cl.: H01M 50/105, H01M 50/178, H01M 50/186, H01M 50/538, H01M 50/533, H01M 50/591, H01M 50/586

(54) **SECONDARY BATTERY**

(30) Priority: 15.10.2024 KR 20240140223
(71) Applicant: SAMSUNG SDI CO., LTD., Yongin-si, Gyeonggi-do 17084 (KR)
(72) Inventor: PARK, Jeong Yi, 17084 Yongin-si, Gyeonggi-do (KR); LEE, Jung Hyun, 17084 Yongin-si, Gyeonggi-do (KR); PARK, Hye Min, 17084 Yongin-si, Gyeonggi-do (KR); LEE, Gi Wook, 17084 Yongin-si, Gyeonggi-do (KR); JUNG, Min Gyu, 17084 Yongin-si, Gyeonggi-do (KR)
(74) Representative: Gulde & Partner

(57) **Abstract**

A secondary battery includes a case and an electrode assembly provided in the case. The electrode assembly includes a first electrode plate having a first electrode tab, with an insulating layer covering a portion of one surface of the first electrode tab. The electrode assembly also includes a second electrode plate having a second electrode tab. A separator is disposed between the first electrode plate and the second electrode plate. The ratio of thickness of the first electrode plate to the thickness of the insulating layer is 45% to 65%.

## Description

### BACKGROUND

### 1. Field

Embodiments of the present disclosure relate to a secondary battery.

### 2. Description of the Related Art

Unlike primary batteries that are not designed to be (re)charged, secondary (or rechargeable) batteries are batteries that are designed to be discharged and recharged. Lowcapacity secondary batteries are used in portable, small electronic devices, such as smart phones, feature phones, notebook computers, digital cameras, and camcorders, while largecapacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes. The present disclosure provides a secondary battery having improved bonding properties due to the rolling rate of an insulating layer provided on an electrode tab, thereby preventing delamination and deformation and making the battery safer.

However, the technical problems to be achieved in the embodiments of the disclosure are not limited to the technical problems mentioned above, and other technical problems not mentioned herein will be clearly understood from the following description by those skilled in the art to which the disclosure belongs.

These and other aspects and features of the present disclosure will be described in or will be apparent from the following description of embodiments of the present disclosure.

A secondary battery according to one embodiment of the present disclosure for solving the above technical problem may comprises: a case and an electrode assembly provided in the case, the electrode assembly including (i) a first electrode plate having a first electrode tab, with an insulating layer covering a portion of one surface of the first electrode tab, (ii) a second electrode plate having a second electrode tab, and (iii) a separator disposed between the first electrode plate and the second electrode plate, and including an insulating layer covering a portion of one surface of the first electrode tab. A ratio of the thickness of the first electrode plate to the thickness of the insulating layer is 45% to 65%.

The first electrode plate may include: a first electrode current collector; a first electrode active material provided on one surface of the first electrode current collector; and the first electrode tab protrudes from the first electrode current collector, in a first direction, and the first electrode active material is not provided on the first electrode tab.

The first electrode tab may be formed by punching a portion to which the first electrode active material is not applied.

The insulating layer may have an end in contact with the first electrode active material.

The first electrode active material may be provided on each of first and second sides of the first electrode current collector, and the insulating layer may be provided on the first and second sides of the first electrode tab.

The insulating layer has a rolling rate of 10% to 30%.

The length of the insulating layer in the first direction may be shorter than the length of the first electrode tab.

The width of the insulating layer may be the same as the width of the first electrode tab.

The thickness of the insulating layer may be 30 µm to 60 µm.

The electrode assembly comprises first electrode plates, separators, second electrode plates, and separators sequentially and repeatedly stacked.

The multiple first electrode tabs may be aligned and stacked at the same position.

The case may include: a case body part including a recess for accommodating the electrode assembly and an extension part extending outwardly from the recess; and a case cover connected to the extension part of the case body part by fusion.

The electrode assembly may further include: a first electrode lead tab that is in contact with and electrically connected to the first electrode tab, the first lead tab including a portion exposed to outside of the case; and a second electrode lead tab that is in contact with and electrically connected to the second electrode tab of the electrode assembly, the second electrode tab including a portion exposed to outside of the case.

The electrode assembly may further include: an insulation tape interposed between the first electrode lead tab and the case; and an insulation tape interposed between the second electrode lead tab and the case.

The second electrode plate may include: a second electrode current collector; a second electrode active material provided on one surface of the second electrode current collector; and the second electrode tab protrudes from the second electrode current collector in the first direction and is spaced apart from the first electrode tab.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing a secondary battery according to the present disclosure.
FIG. 2 is an exploded perspective view of the secondary battery shown in FIG. 1.
FIG. 3 is an exploded perspective view showing an example of an electrode assembly in the secondary battery of FIGS. 1 and 2.
FIG. 4 is a perspective view showing the electrode assembly shown in FIG. 3 combined.
FIG. 5 is a cross-sectional view taken along line 5-5' of FIG. 3.
FIG. 6 is a perspective view showing another example of an electrode assembly in the secondary battery of FIGS. 1 and 2.
FIGS. 7A and 7B are perspective views showing a battery pack including an exemplary secondary battery according to the present disclosure.
FIGS. 8A and 8B are a perspective view and a side view showing a vehicle including an exemplary battery pack according to the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

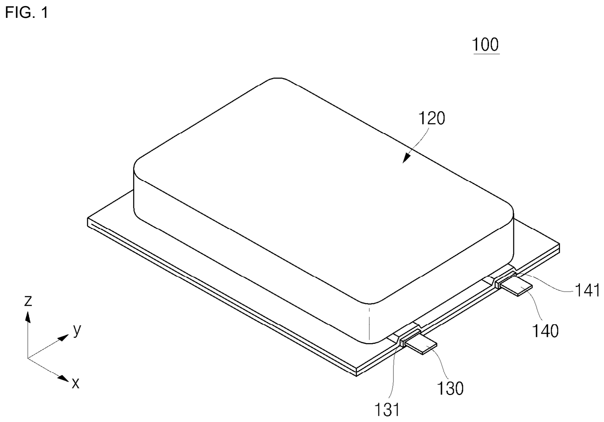

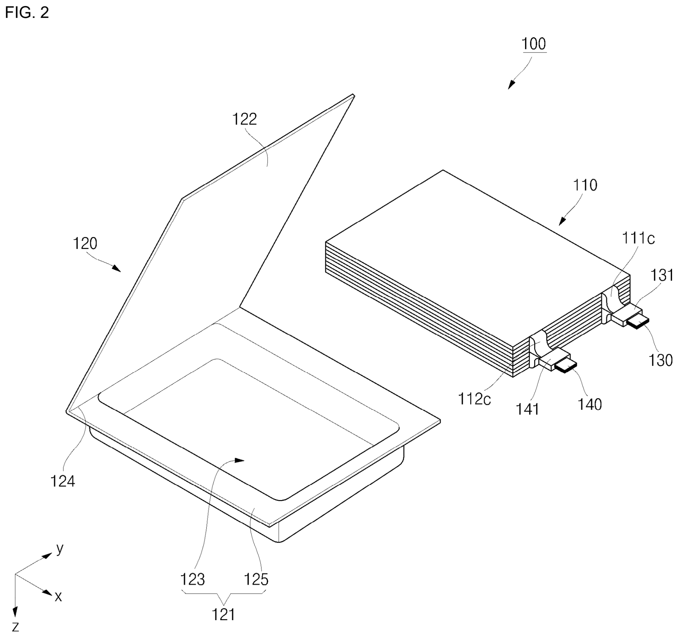

FIG. 1 is a perspective view showing a secondary battery according to the present disclosure, and FIG. 2 is an exploded perspective view of the secondary battery shown in FIG. 1.

Referring to FIGS. 1 and 2, the secondary battery 100 may include an electrode assembly 110 and a case 120 that accommodates the electrode assembly 110 and an electrolyte (optional, not shown) therein. The electrode assembly 110 may have a first electrode plate 111, a separator 113, a second electrode plate 112, and a separator 113 that are sequentially stacked or wound in a jelly-roll shape.

The secondary battery 100 may include a first electrode lead tab 130 electrically connected to the first electrode plate 111 of the electrode assembly 110. The secondary battery 100 may also include a second electrode lead tab 140 electrically connected to the second electrode plate 112 of the electrode assembly 110.

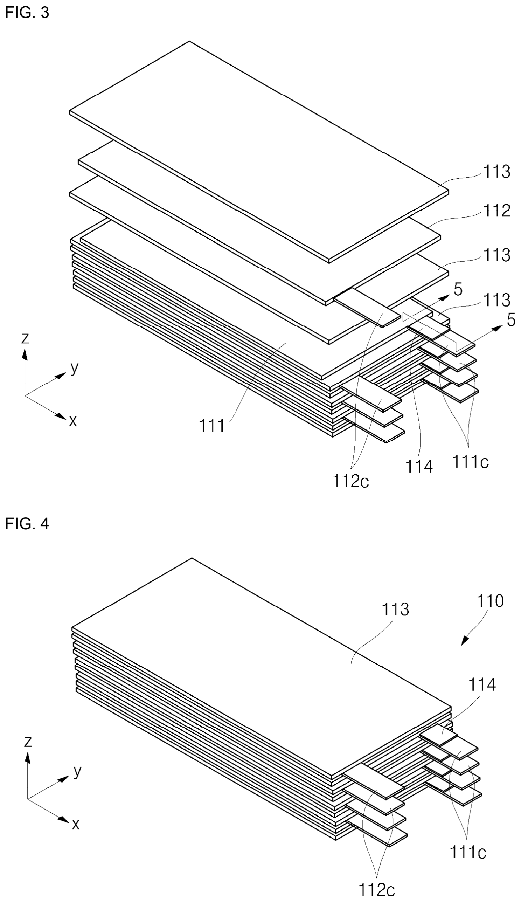

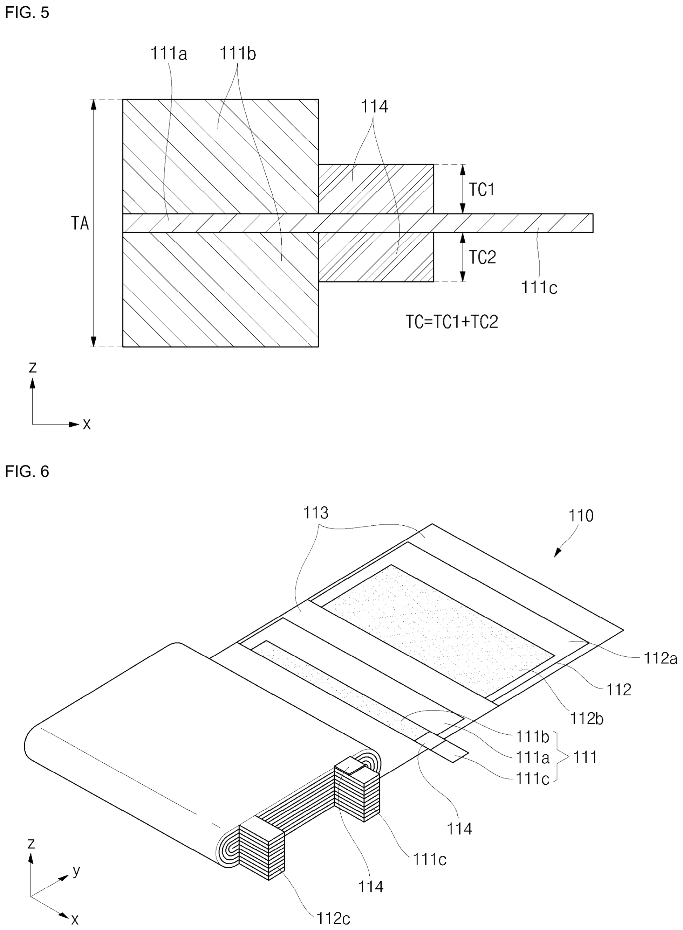

An exploded perspective view and a perspective view of the electrode assembly 110 that can be used in the secondary battery 100 are shown in FIGS. 3 and 4, respectively. IFIG. 5 shows a cross-sectional view taken along line 5-5' of FIG. 3. As shown in FIGS. 3 to 5, the electrode assembly 110 may be of a stack type in which the first electrode plate 111, the separator 113, the second electrode plate 112, and the separator 113 are repeatedly stacked multiple times. As another example, as shown in FIG. 6, the stack of the first electrode plate 111, the separator 113, the second electrode plate 112, and the separator 113, may be wound in a roll shape. The electrode assembly 110 may be referred to as a jelly roll.

Each of the first electrode plate 111, the separator 113, and the second electrode plate 112, may be formed as a thin plate shape or film shape, in a rectangular parallelepiped shape. Which are stacked to form the electrode assembly 110. That is, the electrode assembly 110 may be formed by sequentially stacking the separator 113, the first electrode plate 111, the separator 113, and the second electrode plate 112 in a third direction (z) multiple times to form a rectangular parallelepiped shape. The first electrode plate 111 may be a positive electrode plate, and the second electrode plate 112 may be a negative electrode plate. Of course, the opposite is also possible where the first electrode plate 111 is a negative electrode plate and the second electrode plate 112 is a positive electrode plate. In the following description the first electrode plate 111 is a positive plate and the second electrode plate 112 is a negative plate. The first electrode plate 111 may be formed by applying a first electrode active material 111b, such as a transition metal oxide, to a first electrode current collector 111a formed of a metal foil, such as aluminum. The first electrode may include or be referred to as a positive electrode. The first electrode active material 111b may be provided on one or two sides of the first electrode current collector 111a, but is not limited thereto in the present disclosure. A first electrode uncoated portion may be provided in a region of the first electrode current collector 111a where the first electrode active material 111b is not applied. In addition, the first electrode uncoated portion may include a first electrode tab 111c, which forms a passage for the flow of current between the first electrode plate 111 and the outside of the positive electrode. The first electrode tab 111c may protrude from an end of the first electrode plate 111 in a first direction (x). In addition, at the an end of the first electrode plate 111 in the first direction (x), the first electrode tab 111c may be located at one side in a second direction (y). The first electrode tabs 111c of the multiple stacked first electrode plates 111 may be aligned at the same position in the third direction (z) in the electrode assembly 110. The first electrode tab 111c may be a substrate tab that is formed by punching a portion of the first electrode uncoated portion.

The electrode assembly 110 may further include an insulating layer 114 covering a portion of one side or both sides of the first electrode tab 111c. The insulating layer 114 may be provided in a region adjacent to the first electrode active material 111b in the first electrode tab 111c. One end of the insulating layer 114 in the first direction (x) may be in contact with the first electrode active material 111b. The first electrode tab 111c may extend further along the first direction (x) than insulating layer 114. The length of the insulating layer 114 in the first direction (x) may be shorter than the length of the first electrode tab 111c. The width of the insulating layer 114 in the second direction (y) may be the same as the width of the first electrode tab 111c.

The insulating layer 114 may be provided on the first electrode tab 111c to prevent the second electrode plate 112 and the first electrode tab 111c from being brought into contact with each other. Thus, the insulating layer 114 prevents electrical short circuits within the electrode assembly and makes the secondary battery safer. The insulating layer 114 may be made of an insulating material. For example, the insulating layer 114 may include at least one of polypropylene (PP), polyethylene (PE), polyamide (PA), polyimide (PI), polyurethane (PU), polyvinylidene fluoride (PVDF), styrene-butadiene rubber (SBR), ceramic materials such as alumina and boehmite, and epoxy.

The insulating layer 114 may be coated together with the first electrode active material 111b on one side or both sides of the first electrode current collector 111a. For example, the first electrode active material 111b and the insulating layer 114 may each be provided through a nozzle to at least one side of the roll-type first electrode current collector 111a. When the first electrode active material 111b is provided on both sides of the first electrode current collector 111a, the insulating layer 114 may also be provided on both sides of the first electrode current collector 111a. The first electrode active material 111b and the insulating layer 114 may be provided by a stripe coating process. In such a process, the first electrode active material 111b and the insulating layer 114 may be coated on the first electrode current collector 111a and then rolled. The total thickness of the first electrode plate 111, after rolling, may be greater than the thickness of the insulating layer 114. Here, the thickness of the insulating layer 114 may be the sum of the thicknesses of the insulating layers 114 provided on one or both sides of the first electrode current collector 111a. For example, as shown in FIG. 5, when the insulating layer 114 is provided on both sides of the first electrode current collector 111a, the thickness (TC) of the insulating layer 114 may be the sum (TC1+TC2) of the thicknesses of the two insulating layers 114 that are provided on both sides of the first electrode current collector 111a.

Preferably, the thickness TC of the insulating layer 114 may be 45% to 65% of the thickness TA of the first electrode plate 111. The insulating layer 114 may be provided with a thickness of 60% or less of the total thickness TA of the first electrode plate. Therefore, after rolling the first electrode active material 111b and the insulating layer 114, the thickness of the insulating layer 114 cannot exceed 65% of the total thickness of the first electrode plate 111.

In addition, after being coated and rolled on the first electrode current collector 111a, the first electrode active material 111b and the insulating layer 114 may be separated into individual first electrode plates 111 by notching and slitting. With such a process, the insulating layer 114 may also cover a burr that may occur during notching.

Delamination may occur when the insulating layer 114 is impregnated with an electrolyte or exposed to a high temperature environment. Further, the electrolyte may cause the insulating layer 114 to become more brittle such that elongation of the insulating layer 114 may not occur, which can result in cracks or wrinkles being formed in the insulating layer 114.

Referring to Table 1 below, the results obtained from 10 experimental examples with different rolling rates of the insulating layer 114 are shown. Here, the rolling rate mean the rolling amount compared to the thickness after the insulating layer 114 is coated. The rolling amount mean the thickness of the insulating layer 114 reduced by rolling. In the respective experimental examples (T1 to T10), the first electrode current collector 111a, the first electrode active material 111b, and the insulating layer 114 of the first electrode plate 111 may be made of the same material, and the experimental examples differ only with respect to the thickness TA of the first electrode plate 111 after the first electrode active material 111b is rolled, the thickness TB of the insulating layer 114 after the insulating layer 114 is coated, and the thickness TC of the insulating layer 114 after the insulating layer 114 is rolled. In addition, the electrode plate 111 in the experimental examples is provided with the insulating layer 114 and the first electrode active material 111b on both sides of the first electrode current collector 111a. That is, the thickness TA of the electrode plate 111 is the sum of the thicknesses of one first electrode current collector 111a and two first electrode active materials 111b provided on both sides of the first electrode current collector 111a, and the thickness TC of the insulating layer 114 is the sum (TC1+TC2) of two insulating layers 114 provided on both sides of the first electrode current collector 111a. The experimental results were obtained after the experimental examples (T1 to T10) were exposed to a high temperature (in the range of approximately 50 °C to approximately 120 °C) while being immersed in an electrolyte. In table 1, the unit of thicknesses listed in Table 1 is micrometers (µm).

**[Table 1]**

| Experimental example | Insulating layer | | | | Electrode plate | | Normal or not |
|---|---|---|---|---|---|---|---|
| | TB | TC | Rolling amount | Rolling rate | TA | Thickness ratio | |
| T1 | 14 | 14 | 0 | 0% | 88 | 18% | Delamination |
| T2 | 44 | 43 | 1 | 2% | 85 | 57% | Delamination |
| T3 | 48 | 45 | 3 | 7% | 90 | 56% | Delamination |
| T4 | 42 | 35 | 7 | 17% | 73 | 56% | Non-occurrence |
| T5 | 46 | 39 | 7 | 15% | 85 | 52% | Non-occurrence |
| T6 | 52 | 46 | 6 | 12% | 91 | 57% | Non-occurrence |
| T7 | 45 | 35 | 10 | 23% | 88 | 45% | Non-occurrence |
| T8 | 50 | 37 | 13 | 30% | 91 | 46% | Non-occurrence |
| T9 | 55 | 40 | 15 | 34% | 99 | 45% | Bending |
| T10 | 44 | 25 | 19 | 44% | 88 | 32% | Bending |

In Table 1, the rolling amount TB-TC was obtained by subtracting the thickness TC after the insulating layer 114 is rolled from the thickness TB of the insulating layer 114 before the rolling when the insulating layer 114 was coated. In addition, the rolling rate is the rolling amount TB-TC compared to the thickness TC after the insulating layer 114 is rolled. In addition, the thickness ratio may be the thickness TA of the first electrode plate 111 after the first electrode active material 111b is rolled, compared to the thickness TC of the insulating layer 114 after the insulating layer 114 is rolled.

As can be seen from the experimental results in Table 1, the insulating layer 114 has an appropriate rolling rate (T4 to T8) of 10% to 30%. When the rolling rate of the insulating layer 114 is in the range of 10% to 30%, the void ratio within the insulating layer 114 is reduced such that the impregnation of electrolyte is suppressed. Thus, bonding strength with respect to the first electrode tab 111c is increased to thereby prevent delamination and deformation, thereby improving the insulating properties. When the rolling rate of the insulating layer 114 is less than 10% (T1 to T3), the porosity of the insulating layer 114 increases such that the electrolyte easily penetrates into pores, and, thus, the first electrode tab 111c may be deformed. In addition, when the rolling rate of the insulating layer 114 exceeds 30% (T9 and T10), the insulating layer 114 may be more brittle due to excessive rolling such that elongation does not occur, and, thus, deformation due to breakage or wrinkles may occur. When deformation occurs in the insulating layer 114, it may be difficult to perform additional processes, such as slitting and notching, on the first electrode plate 111. In sum, when the rolling rate is 10% to 30%, the insulating layer 114 may prevent the first electrode tab 111c from being delaminated and, at the same time, prevent the insulating layer 114 from being broken or deformed, thereby improving the bonding strength with respect to the first electrode tab 111c. When the insulating layer 114 has improved bond strength, the safety of the electrode assembly 110 can be improved.

In addition, the preferred thickness ratio of the insulating layer 114 to the first electrode plate 111, which is the ratio of the thickness TC of the insulating layer 114 after rolling to the thickness TA of the first electrode plate 111 after the first electrode active material 111b is rolled, may be 45% to 65%. During coating, the insulating layer 114 is provided to a thickness of 60% or less compared to the thickness of the first electrode plate 111. Thus, after rolling, it is impossible to implement a thickness ratio of the insulating layer 114 of 65% or more compared to the first electrode plate 111. Of course, as described above, it is desirable that the rolling rate of the insulating layer 114 is within 10% to 30%.

If the thickness ratio of the insulating layer 114 relative to the first electrode plate 111 is within the range of 45% to 65%, and when the rolling rate of the insulating layer 114 is not within the range of 10% to 30% (T2, T3, and T9), delamination or deformation of the insulating layer 114 may occur. However, even if the rolling rate of the insulating layer 114 is within the range of 10% to 30%, when the thickness ratio of the insulating layer 114 relative to the first electrode plate 111 is not within the range of 45% to 65%, deformation of the insulating layer 114 may occur due to excessive rolling. In addition, after rolling, the preferred thickness of the insulating layer 114 may be 30 µm to 60 µm. It may be difficult to implement the thickness of the insulating layer 114 to be less than 30 µm, and if the thickness of the insulating layer 114 exceeds 60 µm, increased costs may arise due to the unnecessary thickness.

The multiple first electrode tabs 111c may be electrically connected to a first electrode lead tab 130 and may extend from the inside to outside of the case 120. The first electrode lead tab 130 may be a flat plate that is thicker than the first electrode tabs 111c. In addition, an insulation tape 131 may be interposed between the first electrode lead tabs 130 and the case 120. The insulation tape 131 may insulate between the case 120 and the first electrode lead tab 130.

The first electrode plates 111 may be smaller in the first direction (x) and the second direction (y) than the second electrode plates 112 in consideration of a lithium ion precipitation phenomenon that may occur intermittently in the second electrode plate 112 during charging. That is, the second electrode plates 112 may have a larger planar size than the first electrode plates 111.

Each of the second electrode plates 112 may be formed by applying a second electrode active material, such as a transition metal oxide, to a second electrode current collector formed of a metal foil, such as copper or nickel. The second electrode may include or be referred to as a negative electrode. The second electrode active material may be provided on one side or both sides of the second electrode current collector, and is not limited in the present disclosure. A second electrode uncoated portion, which is a region where a second electrode active material is not applied, may be provided in a region of the second electrode current collector. In addition, the second electrode uncoated portion may include a second electrode tab 112c that forms a passage for the flow of current between the second electrode plate 112 and outside of the negative electrode. The second electrode tabs 112c may protrude from ends of the second electrode plates 112 in the first direction (x). In addition, at the ends of the second electrode plates 112 in the first direction (x), the second electrode tabs 112c may be located at the second side of the electrode assembly in the second direction (y). That is, the second electrode tabs 112c may protrude in the same direction as the first electrode tab 111c and may be arranged parallel to the first electrode tab 111c. The second electrode tabs 112c of the multiple second electrode plates 112 stacked may be aligned at the same position in the third direction (z) in the electrode assembly 110.

The second electrode plates 112 may be formed by applying a second electrode active material to a second electrode current collector, which is a roll-type metal foil. Punching may then be used to separate create separate second electrode plates 112 each having the second electrode tab 112c.

In addition, the multiple second electrode tabs 112c may be electrically connected to one second electrode lead tab 140 and may extend from the inside to outside of the case 120. The second electrode lead tab 140 may be a flat plate that is thicker than the second electrode tabs 112c. In addition, an insulation tape 141 may be further interposed between the second electrode lead tab 140 and the case 120. The insulation tape 141 may insulate between the case 120 and the second electrode lead tab 140.

The separator(s) 113 is positioned between the first electrode plates 111 and the second electrode plates 112 to prevent electrical shorts and enable the movement of transition metal ions. The separator(s) may be made of polyethylene, polypropylene, or a composite film of polyethylene and polypropylene. But the present disclosure is not limited to these examples of materials.

In order to more securely prevent a short circuit between the first electrode plates 111 and the second electrode plates 112, the separator(s) 113 may have a larger width and length in both the first direction (x) and the second direction (y) than the first electrode plates 111 and the second electrode plates 112. That is, the separator(s) 113 may have a larger planar size than the first electrode plates 111 and the second electrode plates 112.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickelmanganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.9≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an etherbased, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

FIG. 6 is a perspective view showing another example of an electrode assembly in a secondary battery according to an embodiment of the present disclosure. The electrode assembly 110 shown in FIG. 6 may be formed by stacking a first electrode plate 111, a separator 113, and a second electrode plate 112, and then winding the stack in a jelly-roll shape.

The first electrode plate 111 is formed by applying a first electrode active material 111b, such as a transition metal oxide, to a first electrode current collector 111a formed of a metal foil, such as aluminum. The first electrode plate 111 includes a first electrode tab 111c extending and protruding from a first electrode uncoated portion, which is a region to which the first electrode active material 111b is not applied. In addition, the electrode assembly may include an insulating layer 114 that covers one or both sides of the first electrode tab 111c. The first electrode tab 111c may be provided as multiple first electrode tabs 111c. At one end of the electrode assembly 110 in the first direction (x), the first electrode tab 111c may be positioned at a first side of the electrode assembly 110 in the second direction (y). The first electrode tabs 111c of the stacked first electrode plates 111 may be aligned at the same position in the third direction (z) in the electrode assembly 110.

The second electrode plate 112 may be formed by applying a second electrode active material 112b such as graphite or carbon to the second electrode current collector 112a formed of a metal foil such as copper or nickel. The second electrode plate 112 includes a second electrode tab 112c extending and protruding from a second electrode uncoated portion, which is a region to which the second electrode active material 112b is not applied. At one end of the electrode assembly 110 in the first direction (x), the second electrode tabs 112c may be positioned at a second side of the electrode assembly 110 in the second direction (y). The second electrode tabs 112c of the multiple second electrode plates 112 stacked may be aligned at the same position in the third direction (z) in the electrode assembly 110.

The separator 113 is positioned between the first electrode plate 111 and the second electrode plate 112 to prevent electrical shorts and enable the movement of transition metal ions. The separator 113 may be similar to the separator 113 described with reference to FIGS. 4 and 5.

Referring again to FIG. 2, the case 120 according to embodiments of the present disclosure may include a case body part 121 and a case cover 122, which are formed from a rectangular film that is folded is the longitudinal direction (x) of the case 120. The case cover 122 may be coupled and sealed to the case body part 121 by folding the case cover 122 after the electrode assembly 110 is accommodated in a recess 123 provided in the case body part 121. The case 120 may be referred to as a pouch for a secondary battery.

The case 120 may be formed by folding a rectangular film extending along the first direction x with respect to a folding part 124 extending along the second direction (y), which is perpendicular to the first direction (x) and the width direction of the case 120. In another example, the case body part 121 and the case cover 122 may be formed as separate members, in which case the folding part 124 is not provided. The case 120 is not limited to an integral type in which the case body part 121 and the case cover 122 are formed on a single film in the present disclosure. However, , the following description will be directed to an example in which the case body part 121 and the case cover 122 are formed from a single rectangular film.

The case cover 122 may have a rectangular flat plate shape and may be in contact with and be coupled to the case body part 121 through the folding part 124. The case cover 122 may cover the upper portion of the case body part 121. In addition, the case body part 121 may include the recess 123 and an extension part 125. The case body part 121 may include the recess 123 having the electrode assembly 110 received at approximately the center thereof, and with the extension part 125 extending outward from three sides of the recess 123. Around the recess 123 sealed with the edge of the case cover 12, the edge of the case body part 121 is located on the outer side in a plane is defined as the extension part 125. That is, the extension part 125 may be a surface that is parallel to and combined with the case cover 122. The recess 123 of the case body part 121 may be sized to accommodate the electrode assembly 110 through a pressing or drawing process, etc. In addition, the extension part 125 may extend outward from the four sides of recess 123.

In another example, when the case body part 121 and the case cover 122 are formed as separate members with the extension part 125 being provided in a region where the folding part 124 is located. Of course, when the case body part 121 and the case cover 122 are formed as one piece, the extension part 125 may also be provided in the case body part 121 adjacent to the folding part 124.

The case body part 121 may be combined and sealed by heat-fusing the edge of the recess 123 and the edge of the case cover 122 after the case cover 122 covers the portion where the recess 123 is formed.

The secondary battery 100 of the present disclosure is shown as having the electrode assembly 110 accommodated within the pouch-shaped case 120. But cases having various shapes can be used in other embodiments of the present disclosure.

In another example, the secondary battery 100 is a cylindrical secondary battery including a cylindrical case and a cap plate that seals an open end of the cylindrical case. As yet another example, the secondary battery 100 may be a square secondary battery including a square case having one open side and a cap plate sealing the open side of the square case. As a still further another example, the secondary battery 100 may be a prismatic secondary battery having a side terminal structure, including a prismatic case having two open opposite sides and two cap plates that seal each of the open sides of the prismatic case.

The secondary battery according to the above-described embodiment can be used to manufacture a battery pack.

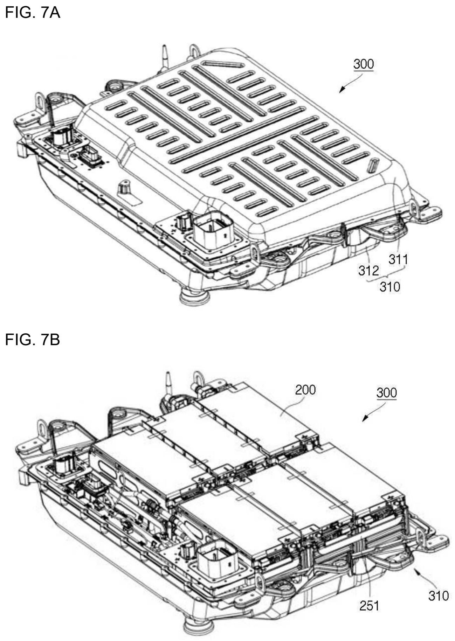

FIGS. 7A and 7B are perspective views showing an exemplary battery pack 300. The battery pack 300 may include a plurality of battery modules 200 and a housing 310 configured to accommodate the plurality of battery modules 200. For example, the housing 310 may include a first housing 311 and a second housing 312, which are coupled to each other in directions facing each other with the plurality of battery modules 200 interposed therebetween. The plurality of battery modules 200 may be electrically connected to each other using bus bars 251. The plurality of battery modules 200 may be electrically connected to each other in series, in parallel, or in a combination thereof, so that desired electrical output may be obtained.

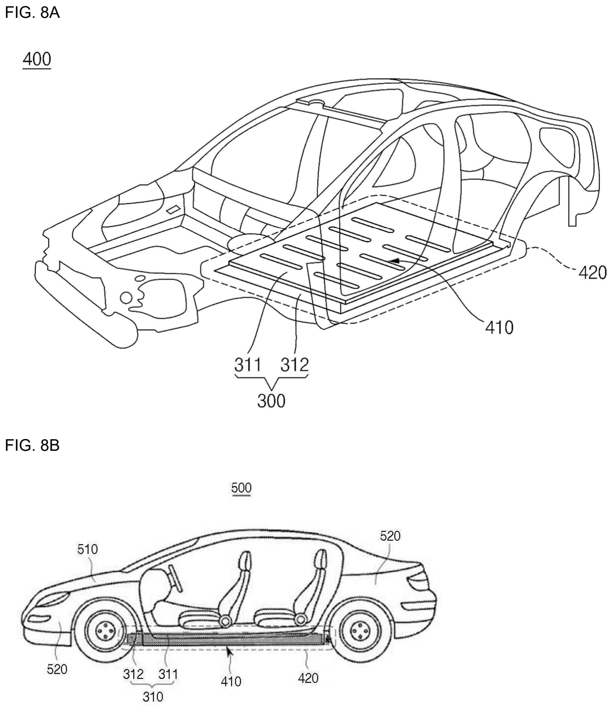

FIGS. 8A and 8B are, respectively, a perspective view and a side view showing vehicles 400 and 500 each including the exemplary battery pack 300. As shown in FIG. 8A, the battery pack 300 may include a battery pack cover 311 (which may correspond to the first housing), which is a portion of a vehicle underbody 410, and a pack frame 312 (which may correspond to the second housing), which is disposed beneath the vehicle underbody 410. The battery pack cover 311 and the pack frame 312 may be integrally formed with a vehicle bottom portion 420. The vehicle underbody 410 may separate the interior and the exterior of the vehicle from each other, and the pack frame 312 may be disposed outside the vehicle.

As shown in FIG. 8B, the vehicle 500 may include a vehicle body 400 and various parts coupled to the vehicle body 400, such as a hood 510 located at the front portion of the vehicle and fenders 520 located at the front and rear portions of the vehicle. The vehicle 500 may include the battery pack 300 including the battery pack cover 311 and the pack frame 312, and the battery pack 300 may be coupled to the vehicle body 400.

The above is only one embodiment for implementing a secondary battery according to the disclosure, the disclosure is not limited to the above embodiment, and there is the disclosure to the extent that various modifications can be made by anyone having ordinary skill in the art to which the disclosure pertains without departing from the gist of the disclosure.

## Claims

1. A secondary battery (100) comprising:
a case (120); and
an electrode assembly (110) provided in the case (120), the electrode assembly (110) including (i) a first electrode plate (111) having a first electrode tab (111c), with an insulating layer (114) covering a portion of one surface of the first electrode tab (111c), (ii) a second electrode plate (112) having a second electrode tab (112c), and (iii) a separator (113) disposed between the first electrode plate (111) and the second electrode plate (112),
wherein a ratio of the thickness of the first electrode plate (111) to the thickness of the insulating layer (114) is 45% to 65%.

2. The secondary battery (100) as claimed in claim 1, wherein the first electrode plate (111) comprises:
a first electrode current collector (111a);
a first electrode active material (111b) provided on a surface of the first electrode current collector (111a), and
wherein the first electrode tab (111c) protrudes from the first electrode current collector (111a) in a first direction, and the first electrode active material (111b) is not provided on the first electrode tab (111c).

3. The secondary battery (100) as claimed in claim 2, wherein the first electrode tab (111c) is formed by punching a portion to which the first electrode active material (111b) is not applied.

4. The secondary battery (100) as claimed in claim 2 or 3, wherein an end of the insulating layer (114) contacts the first electrode active material (111b).

5. The secondary battery (100) as claimed in any one of claims 2 to 4, wherein the first electrode active material (111b) is provided on each of first and second sides of the first electrode current collector (111a), and the insulating layer (114) is provided on the first and second sides of the first electrode tab (111c).

6. The secondary battery (100) as claimed in any one of claims 2 to 5, wherein the insulating layer (114) has a rolling rate of 10% to 30%, wherein the rolling rate is a rolling amount compared to a thickness after the insulating layer (114) is coated and the rolling amount is the thickness of the insulating layer (114) reduced by rolling.

7. The secondary battery (100) as claimed in any one of the preceding claims, wherein a length of the insulating layer (114) is shorter than a length of the first electrode tab (111c).

8. The secondary battery (100) as claimed in any one of the preceding claims, wherein a width of the insulating layer (114) is the same as a width of the first electrode tab (111c).

9. The secondary battery (100) as claimed in any one of the preceding claims, wherein a thickness of the insulating layer (114) is 30 µm to 60 µm.

10. The secondary battery (100) as claimed in any one of the preceding claims, wherein the electrode assembly (110) comprises first electrode plates (111), separators (113), second electrode plates (112), and separators (113) sequentially and repeatedly stacked.

11. The secondary battery (100) as claimed in claim 10, wherein the multiple first electrode tabs (111c) are aligned and stacked at the same position.

12. The secondary battery (100) as claimed in any one of the preceding claims, wherein the case (120) comprises:
a case body part (121) including a recess (123) for accommodating the electrode assembly (110) and an extension part (125) extending outward from the recess (123); and
a case cover (122) connected to the extension part (125) of the case body part (121).

13. The secondary battery (100) as claimed in any one of the preceding claims, wherein the electrode assembly (110) further comprises:
a first electrode lead tab (130) that is in contact with and electrically connected to the first electrode tab (111c), the first electrode lead tab (130) including a portion exposed outside of the case (120); and
a second electrode lead tab (140) that is in contact with and electrically connected to the second electrode tab (112c) of the electrode assembly (110), the second electrode tab (112c) including a portion exposed outside of the case (120).

14. The secondary battery (100) as claimed in claim 13, wherein the electrode assembly (110) further comprises:
an insulation tape (131) interposed between the first electrode lead tab (130) and the case (120); and
an insulation tape (141) interposed between the second electrode lead tab (140) and the case (120).

15. The secondary battery (100) as claimed in claim 2, wherein the second electrode plate (112) comprises:
a second electrode current collector (112a);
a second electrode active material (112b) provided on a surface of the second electrode current collector (112a), and
wherein the second electrode tab (112c) protrudes from the second electrode current collector (112a) in the first direction and is spaced apart from the first electrode tab (111c), and the second electrode active material (112b) is not provided on the second electrode tab (112c).
